# FASCICULE DE BREVET EUROPEEN

(11) **EP 1 595 673 B1**
(45) Date de publication et mention de la délivrance du brevet: **31.10.2007**
(21) Numéro de dépôt: 05103748.9
(22) Date de dépôt: 04.05.2005
(51) Int. Cl.: B29C 37/02, B29D 30/06

(54) **Procédé d'obtention d'une bande de roulement pour pneumatique**
Method of manufacturing a tyre tread
Herstellungsverfahren einer Reifenlauffläche

(30) Priorité: 10.05.2004 FR 0405049
(43) Date de publication de la demande: 16.11.2005
(73) Titulaire: Société de Technologie Michelin, 63000 Clermont-Ferrand (FR); Michelin Recherche et Technique S.A., 1763 Granges-Paccot (CH)
(72) Inventeur: Menard, Gilbert, 63530 Volvic (FR)
(74) Mandataire: Diernaz, Christian

(56) Documents cités:
- EP-A- 1 125 709
- EP-A- 1 232 852
- EP-A- 1 275 527
- GB-A- 178 358
- GB-A- 252 598
- US-A- 3 903 948
- US-A1- 2001 001 516
- PATENT ABSTRACTS OF JAPAN vol. 0070, no. 63, 16 mars 1983 (1983-03-16) -& JP 57 208234 A (YOKOHAMA RUBBER CO.), 21 décembre 1982 (1982-12-21)
- PATENT ABSTRACTS OF JAPAN vol. 2003, no. 02, 5 février 2003 (2003-02-05) -& JP 2002 307442 A (BRIDGESTONE), 23 octobre 2002 (2002-10-23)

## Description

### Domaine de l'invention

La présente invention concerne les procédés de fabrication de pneumatiques ou de bandes de roulement pour pneumatiques.

### Définitions

Dans le présent document, les termes « axial » et « axialement » se réfèrent à une direction sensiblement parallèle à l'axe de rotation d'un pneumatique. Lorsque ces termes sont appliqués à une bande de roulement, ils se réfèrent à la direction qui est parallèle à l'axe de rotation d'un pneu lorsque la bande de roulement est fixée sur le pneumatique. Autrement dit, la direction axiale est la direction perpendiculaire à la fois à l'épaisseur de la bande de roulement et à la circonférence du pneumatique.

Les termes « radial » et « radialement » se réfèrent à une direction parallèle à un vecteur perpendiculaire à la direction axiale et qui coupe l'axe de rotation d'un pneumatique. Lorsque ces termes sont appliqués à une bande de roulement, ils se réfèrent aux directions parallèles à un vecteur perpendiculaire à l'axe de rotation d'un pneu et comprenant un point de l'axe de rotation du pneumatique, lorsque la bande de roulement est incorporée sur le pneumatique. Autrement dit, une direction radiale est une direction parallèle à l'épaisseur de la bande de roulement.

Les termes « circonférentiel » et « circonférentiellement » se réfèrent à une direction qui est perpendiculaire à la fois aux directions axiale et radiale.

Par « surface de roulement » d'une bande de roulement d'un pneumatique, on entend la surface formée par les points de la bande de roulement qui entrent en contact avec le sol lorsque le pneu roule.

Par « face latérale » d'une bande de roulement d'un pneumatique, on entend toute partie de la surface de la bande de roulement qui s'étend des extrémités axiales de la surface de roulement aux flancs du pneumatique. Lorsqu'on considère une bande de roulement avant qu'elle soit incorporée sur un pneumatique, une face latérale est constituée par la partie de la surface de la bande de roulement qui relie un des bords axiaux de la surface de roulement à la surface destinée à entrer en contact avec la carcasse du pneumatique.

Par « doigt », on entend tout élément moulant destiné à mouler une cavité dont au moins une partie est située sous la surface du moule moulant la surface de roulement et qui débouche sur au moins une face latérale de la bande de roulement, sans limitation de sa géométrie.

Par « canal », on entend une cavité moulée par un doigt.

Par « surface intérieure » d'un canal, on entend la surface formée par les points de la bande de roulement ayant été en contact direct avec la surface du doigt juste avant le démoulage.

Par « mélange » ou « mélange de caoutchouc », on entend une composition de caoutchouc comportant au moins un élastomère et une charge.

Par « rainure », on entend un évidement moulé dans la bande de roulement et délimité latéralement par des parois de mélange, la largeur moyenne séparant ces parois latérales étant au moins égale a 2 mm.

Par « protubérance », on entend une partie de mélange située à l'interface entre une rainure d'une bande de roulement et un canal moulé dans la bande de roulement, et formant saillie à la partie radialement extérieure au canal de la surface de la paroi latérale de la rainure sur laquelle débouche le canal.

Le terme « pneumatique » désigne ici tous types de bandages élastiques, gonflés ou non, soumis en service à une pression interne ou non.

### Arrière-plan technologique

Il est connu depuis longtemps que la présence de canaux situés sous la surface de roulement d'un pneumatique et débouchant sur une face latérale de la bande de roulement peut conférer des propriétés intéressantes au pneumatique, notamment lorsqu'il comporte une bande de roulement épaisse. Les canaux rendent la sculpture de la bande de roulement évolutive, car ils apparaissent en surface de la bande de roulement au fur et à mesure de son usure, favorisant ainsi l'adhérence sur sol humide sans pour autant sacrifier la rigidité de la bande de roulement à l'état neuf. De plus, les canaux contribuent au refroidissement des épaules du pneumatique (effet de ventilation) et améliorent par conséquent son endurance. Cet effet thermique est amplifié lorsque le canal débouche non seulement sur une face latérale de la bande de roulement, mais aussi dans une rainure de la bande de roulement.

La demande de brevet EP 1 232 852 décrit un moule et un procédé de moulage d'une bande de roulement comportant ce type de canal. Le moule comprend des secteurs de couronne mobiles radialement et comportant des nervures destinées à mouler des rainures, et des secteurs d'épaule mobiles radialement et axialement, parmi lesquels au moins certains portent des doigts destinés à mouler les canaux axiaux. Dans un mode de réalisation préférentiel, ces doigts prennent appui, pendant la pénétration des doigts dans le mélange formant la bande de roulement, sur les nervures, afin de résister à la pression exercée par le mélange à mouler.

Ce procédé de moulage a montré son efficacité ; toutefois, à l'usage, il a été constaté qu'un film de mélange peut se former de façon aléatoire entre la surface du doigt et la nervure sur laquelle ce même doigt prend appui. La formation de ce film est favorisée par les fortes pressions de moulage (de l'ordre de 10 bar) qui amplifient le fluage du mélange dans l'espace dû au jeu entre doigt et nervure. Les dimensions du film résultent, entre autres, des tolérances d'obtention des pièces du moule, des conditions thermiques et d'exploitation, ainsi que de l'usure des pièces du moule. Dans le moule décrit dans la demande de brevet EP 1 232 852, le film n'est pas nécessairement rompu lors du retrait axial du doigt, ni lors du retrait radial du secteur de couronne. Si le film subsiste intégralement ou partiellement, il obture l'orifice reliant le canal à la rainure. En usage, cette obturation réduit ou bloque les flux de gaz ou de liquides entre le canal et la rainure ; par conséquent, la contribution du canal à l'évacuation de l'eau et à l'abaissement de la température de fonctionnement des parties du pneumatique l'entourant, et notamment des épaules du pneumatique, est réduite ou même nulle.

Le même phénomène a été observé dans d'autres moules. Le brevet EP 925 907 décrit un moule à doigts pour mouler une partie d'une bande de roulement d'un pneumatique, ce moule comportant au moins un élément moulant destiné à mouler un évidement dans la bande de roulement, deux des parois principales de l'évidement étant pourvues d'au moins un élément de liaison reliant ces parois. L'élément moulant est constitué d'une première et d'une deuxième partie : la première partie constitue le support, la deuxième partie comporte au moins un doigt destiné à être assemblé avec la première partie de façon à former au moins un orifice pour mouler les éléments de liaison reliant les parois principales de l'évidement. Le jeu nécessaire à la mise en place des doigts dans le support conduit à la formation de films de mélange. Une partie seulement des films étant rompus au moment des dégagements des doigts, il est proposé de prévoir, dans chaque passage de doigt, et sur chaque doigt, des filetages permettant d'introduire chaque doigt par vissage. Cette disposition permet de réduire de façon sensible la quantité de mélange pouvant pénétrer dans chaque passage. En outre, le mouvement de rotation imposé à chaque doigt pour le dévissage a pour effet de cisailler et donc de rompre les films formés entre chaque doigt et les passages du doigt. Un inconvénient de cette solution consiste en ce qu'elle nécessite des moyens de vissage et de dévissage de chaque doigt et rend le moulage et le démoulage très complexe. Un autre inconvénient de la solution réside dans le fait qu'elle crée des contraintes concernant la géométrie de chaque doigt, car les zones pourvues de filetage sont nécessairement cylindriques.

Le brevet EP 1 275 527 mentionne également la formation de films de mélange entre deux éléments moulants avant la vulcanisation et propose d'équiper les extrémités des éléments moulants de lames tranchantes permettant de désolidariser ces petites quantités de mélange de la bande de roulement au moment même de leur formation.

L'invention vise à obtenir un canal situé radialement sous la surface d'une bande de roulement d'un pneumatique et qui débouche à la fois sur une face latérale de la bande de roulement et sur au moins une paroi latérale d'au moins une rainure de la bande de roulement sans être obturé par un film de mélange.

Ainsi, un principe de l'invention est de créer un « défaut » de moulage dans une zone facile d'accès pour pouvoir le supprimer sans difficulté.

Cet objectif est atteint par un procédé pour obtenir une bande de roulement en mélange, cette bande comportant une surface de roulement limitée axialement par des faces latérales, au moins une rainure limitée par deux parois latérales, et au moins un canal situé radialement sous la surface de roulement et débouchant sur au moins une face latérale de la bande de roulement et sur au moins une paroi latérale d'au moins une rainure, ce procédé comportant les étapes suivantes :
- moulage de la bande de roulement avec au moins une rainure et au moins un canal débouchant sur au moins une face latérale de la bande de roulement, ce canal étant prolongé, à l'intérieur de la rainure de manière à ce qu'au moins un plan qui est localement tangent à la partie radialement extérieure au canal d'au moins une paroi latérale sur laquelle débouche le canal divise le canal en deux parties ;
- ablation, après vulcanisation, d'au moins une partie du mélange moulé autour du canal à l'intérieur de la rainure.

L'ablation est effectuée après extraction du pneumatique ou de la bande de roulement hors du moule ; elle peut être effectuée par découpe, par arrachement, par une sollicitation mécanique après un traitement cryogénique ou par tout autre moyen connu. Il peut être avantageux de dimensionner la partie du mélange qui doit être enlevée en fonction du moyen d'ablation. Ainsi, il est préférable d'avoir un film plus fin (ayant une épaisseur inférieure à 0.5 mm) lorsqu'on effectue l'ablation après un traitement cryogénique, plus épais (ayant une épaisseur supérieure à 0.5 mm) lorsque ce n'est pas le cas.

Selon un mode de réalisation préférentiel, le canal se prolonge à l'intérieur de la rainure par une protubérance. Préférentiellement, la distance axiale entre au moins un plan qui est localement tangent à la partie radialement extérieure au canal de la paroi latérale à laquelle la protubérance forme saillie et le point de la surface intérieure du canal le plus proche de la paroi latérale de la rainure opposée à la paroi latérale sur laquelle la protubérance forme saillie est supérieure à 20 % de la largeur moyenne de la rainure. Ainsi il est plus facile d'atteindre la protubérance lors de l'étape d'ablation.

Selon un autre mode de réalisation préférentiel, le canal traverse ladite rainure de manière à ce qu'une première partie du canal débouche à la fois sur une face latérale de la bande de roulement et sur une paroi latérale de la rainure, et qu'une autre partie du canal débouche en regard de la première sur la paroi latérale opposée de la rainure. Ce mode de réalisation a l'avantage que la partie du mélange ayant entouré le canal à l'intérieur de la rainure est déchirée lors du démoulage, ce qui amorce la création de l'orifice avant même que l'on procède à l'ablation.

Selon un autre mode de réalisation préférentiel, tout le mélange entourant le canal à l'intérieur de ladite rainure à l'issu de l'étape de moulage est enlevé lors de l'ablation ; ainsi il est certain qu'aucune partie du mélange ayant entouré le canal à l'intérieur de la rainure et ayant obstrué le canal ne subsiste après l'ablation.

Préférentiellement, l'ablation est effectuée sur le pneumatique mis en rotation, par un couteau ou une meule qui sont introduits dans la rainure, ou par un faisceau laser, en suivant le profil de la rainure. Il s'agit là de l'un des avantages majeurs du procédé selon l'invention : il est possible d'atteindre tous les « défauts » de moulage en introduisant un moyen d'ablation dans la ou les rainures et en mettant en rotation le pneumatique. L'art antérieur (GB 252 598) connaît le principe de créer des bavures à l'intérieur des canaux, mais la découpe de ces bavures nécessite l'introduction du moyen de découpe dans chacun des canaux, ce qui rend l'opération lourde et onéreuse.

Le procédé selon l'invention a comme effet de localiser entièrement à l'intérieur de la rainure le film de mélange formé lors du moulage à l'interface entre le doigt moulant le canal et la nervure moulant la rainure. Si cet effet est obtenu par un doigt qui est prisonnier, dans un sens radial, de la nervure moulant la rainure, il est nécessaire de respecter un ordre précis lors du démoulage et de retirer, au moins partiellement, le doigt axialement avant de retirer radialement le secteur de couronne comportant la nervure qui moule la rainure et dans laquelle s'insère le doigt.

L'invention sera mieux comprise grâce à la description des dessins selon lesquels :

la figure 1 représente schématiquement en coupe radiale une partie d'un moule en configuration ouverte ainsi que la partie correspondante d'un pneumatique avant le moulage ;

la figure 2 représente schématiquement en coupe radiale une partie d'un moule après la fermeture du moule, un doigt ayant terminé sa pénétration radiale dans la bande de roulement du pneumatique ;

la figure 3 représente schématiquement en coupe radiale une partie d'un moule en configuration partiellement ouverte, un doigt ayant été déplacé axialement après le moulage du pneumatique ;

la figure 4 représente schématiquement en coupe radiale une partie d'un moule en configuration ouverte, un secteur de couronne ayant été déplacé radialement, ainsi que la partie correspondante d'un pneumatique moulé ;

la figure 5 représente schématiquement en coupe radiale une partie d'un pneumatique moulé ainsi qu'un dispositif de coupe prévu pour enlever une protubérance de mélange obstruant un canal du pneumatique ;

la figure 6 représente schématiquement en coupe radiale une partie d'un pneumatique moulé après le découpage de la protubérance obstruant un canal du pneumatique ;

la figure 7 représente schématiquement une protubérance obstruant l'orifice d'un canal débouchant sur la paroi latérale d'une rainure de la bande de roulement ;

la figure 8 représente schématiquement l'orifice d'un canal débouchant sur la paroi latérale d'une rainure de la bande de roulement, après découpage ;

les figures 9 à 13 représentent schématiquement, dans une coupe axiale, une partie d'une bande de roulement après le démoulage et avant l'étape de la découpe.

### Description de modes de réalisation

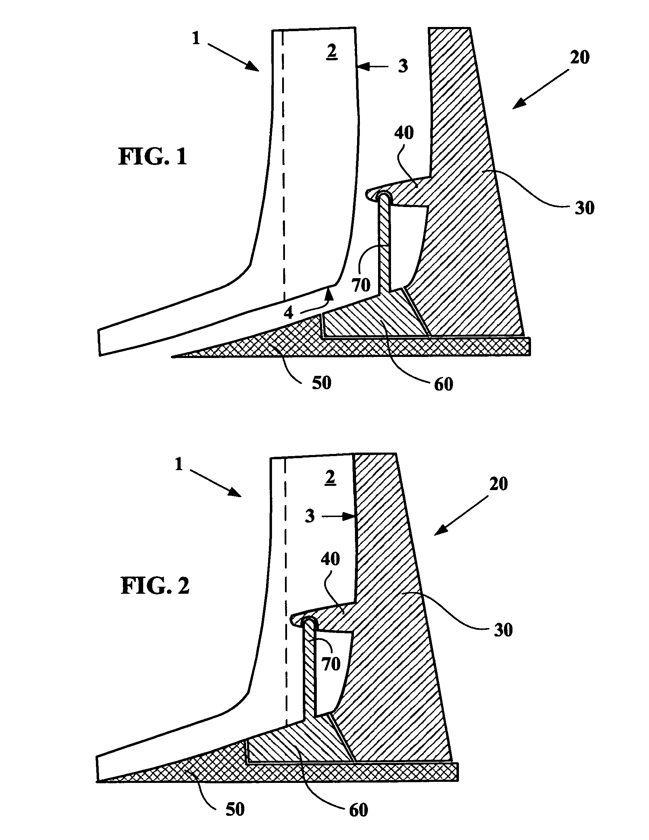

La figure 1 représente schématiquement en coupe radiale une partie d'un moule 20 en configuration ouverte ainsi que la partie correspondante d'un pneumatique 1 avant le moulage. Sur cette vue partielle en coupe, on reconnaît un secteur de couronne 30 portant une nervure 40 prévue pour mouler une rainure de la bande de roulement 2 du pneumatique 1. Ce secteur de couronne 30 est mobile radialement par rapport a la coquille 50 moulant les flancs du pneumatique 1 de manière connue en soi. Le secteur d'épaule 60 prévu pour mouler la face latérale 4 de la bande de roulement 2 porte un doigt 70 prévu pour mouler un canal sous la surface de roulement 3 du pneumatique. Le secteur d'épaule 60 est mobile radialement et axialement par rapport au secteur de couronne 30. Dans le cas représenté, le doigt 70 se loge dans un évidement prévu dans la nervure 40 du secteur de couronne 30, mais il ne s'agit pas d'une caractéristique limitative du procédé selon l'invention, comme cela apparaîtra ci-dessous.

La figure 2 représente schématiquement en coupe radiale une partie du moule 20 ainsi que la partie correspondante du pneumatique 1 après fermeture du moule. Le doigt 70 prévu pour mouler un canal sous la surface de roulement 3 du pneumatique et la nervure 40 prévue pour mouler une rainure de la bande de roulement 2 ont pénétré dans le mélange cru de la bande de roulement 2.

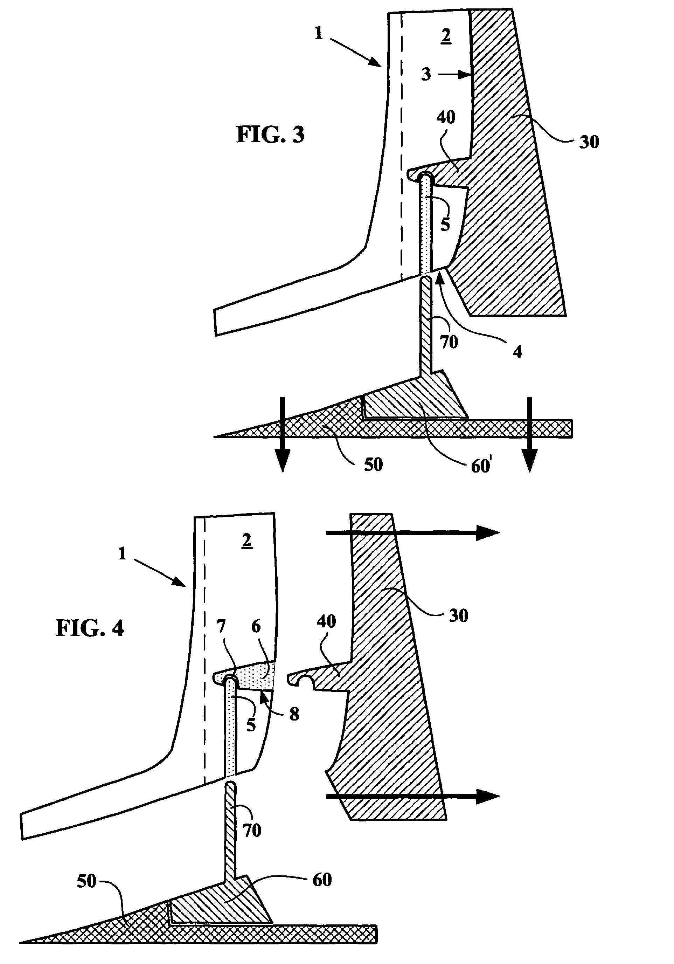

La figure 3 représente schématiquement le premier stade de démoulage : la coquille 50 ainsi que le secteur d'épaule 60 portant un doigt 70 effectuent un mouvement axial (direction indiquée par les flèches) de manière à faire sortir le doigt 70 de son logement dans la nervure 40 du secteur de couronne 30 et de la bande de roulement 2 du pneumatique 1. On reconnaît le canal 5 moulé par le doigt 70 et débouchant sur la face latérale 4 de la bande de roulement 2.

La figure 4 montre une partie du moule 20 et la partie correspondante du pneumatique 1 après le deuxième stade de démoulage : le secteur de couronne 30 effectue un mouvement radial (direction indiquée par les flèches) afin de dégager la nervure 40 de la rainure 6 moulée dans la bande de roulement 2 du pneumatique 1. Cette rainure 6 ne communique pas avec le canal 5, car une petite quantité de mélange a pénétré dans l'espace dû au jeu entre le doigt 70 et la nervure 40 et forme une protubérance 7 sur la paroi latérale 8 de la rainure 6.

Dans le cas représenté, le doigt 70 doit être retiré au moins partiellement avant le retrait du secteur de couronne 30. Cet exemple n'est pas limitatif. Selon les géométries du doigt 70 et de la nervure 40, les stades de démoulage mentionnés peuvent être inversés ou effectués simultanément.

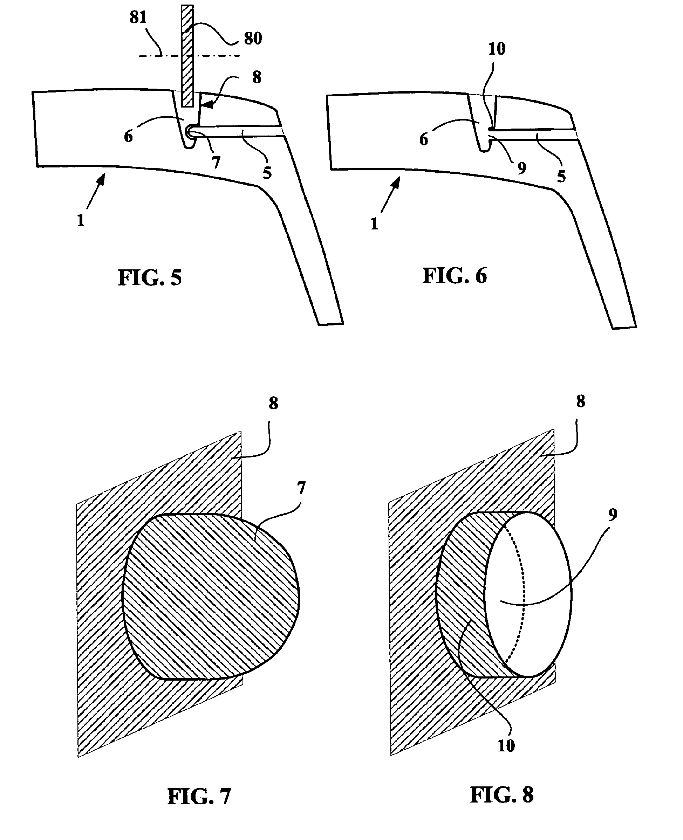

La figure 5 représente schématiquement la deuxième étape du procédé selon l'invention. Après l'étape de moulage, la protubérance 7 formée sur la paroi latérale 8 de la rainure 6 est réduite de façon à créer un orifice reliant la rainure 6 et le canal 5. Le découpage est effectué à l'aide d'une meule 80 tournant autour d'un axe 81. Bien entendu, bien d'autres moyens de découpage, comme un couteau ou un faisceau laser peuvent être utilisés.

La figure 6 représente schématiquement une partie du pneumatique 1 après le découpage de la protubérance 7 (figure 5) formée sur la paroi latérale 8 de la rainure 6. L'extrémité de la protubérance 7 ayant été enlevée, un orifice 9 relie la rainure 6 et le canal 5. Dans le cas présent, la totalité du film de mélange n'a pas été découpée ; il subsiste une paroi 10 prolongeant le canal à l'intérieur de la rainure 6. Cet exemple n'est aucunement limitatif : il peut en effet être préférable d'enlever la totalité du film de mélange formé à l'intérieur de la rainure.

Les figures 7 et 8 montrent la protubérance 7 sur la paroi latérale 8 de la rainure 6 de la figure 5 en vue perspective, avant et après l'étape d'ablation du procédé selon l'invention. On reconnaît la paroi 10 qui prolonge le canal 5 à l'intérieur de la rainure 6.

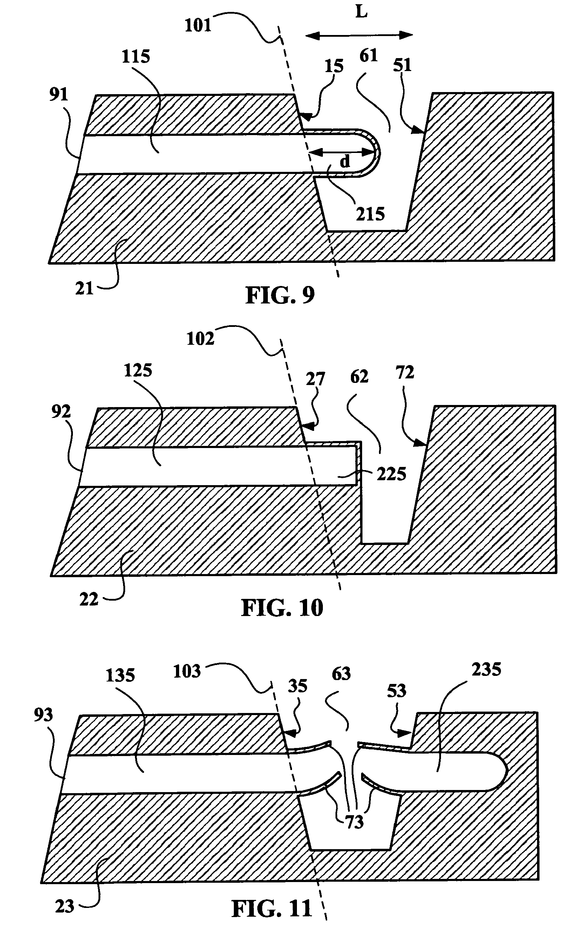

Les figures 9 à 13 représentent schématiquement des bandes de roulement obtenues par le procédé selon l'invention, avant la deuxième étape du procédé.

La figure 9 représente une partie de bande de roulement 21 comportant une rainure 61 et un canal s'étendant d'un orifice 91 dans une face latérale de la bande de roulement 21 jusqu'à l'intérieur de la rainure 61. Le canal débouche sur une paroi latérale 15 de la rainure 61 mais ne traverse pas la rainure : une de ses extrémités forme une protubérance à l'intérieur de la rainure. On reconnaît la trace du plan 101 qui est localement tangent à la partie 15, radialement extérieure au canal, de la paroi latérale sur laquelle débouche le canal. Cette trace divise le canal en deux parties 115 et 215. Dans le cas présent, la distance axiale d entre le plan 101 et le point de la surface intérieure du canal le plus proche de la paroi latérale opposée 51 est supérieure à 50 % de la largeur moyenne L de la rainure. Dans l'exemple représenté, l'épaisseur du mélange entourant le canal à l'intérieur de la rainure 61 est constante. Bien entendu, cela ne constitue pas une limitation du procédé. L'épaisseur peut varier et, lorsque le mélange ne remplit pas tout l'espace dû au jeu entre le doigt moulant le canal et la nervure moulant la rainure 61, il peut même y avoir des orifices reliant le canal et la rainure.

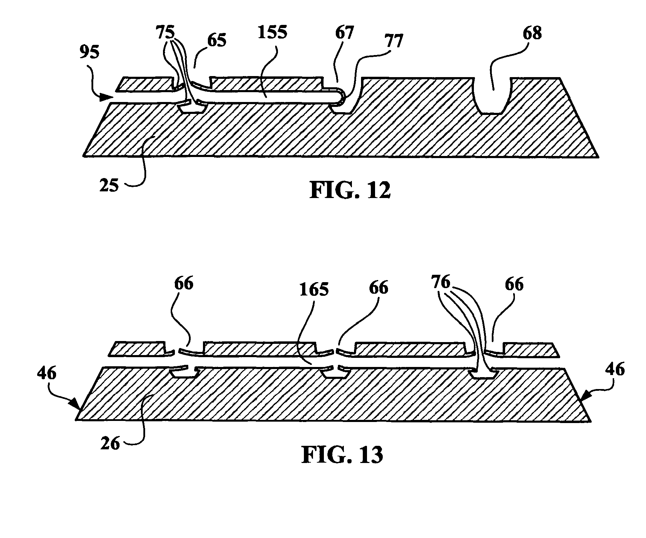

La figure 10 représente une partie d'une autre bande de roulement 22 comportant une rainure 62 et un canal s'étendant d'un orifice 92 dans une face latérale de la bande de roulement 22 jusqu'à l'intérieur de la rainure 62. Comme dans l'exemple précédent, le canal débouche sur une paroi latérale 27 de la rainure 62 mais ne traverse pas la rainure : une de ses extrémités forme une protubérance à l'intérieur de la rainure. La trace du plan 102 qui est localement tangent à la partie 27, radialement extérieure au canal, de la paroi latérale sur laquelle débouche le canal, divise le canal en deux parties 125 et 225. Le moule utilisé pour obtenir cette bande de roulement 22 a l'avantage qu'il n'est pas nécessaire de retirer, même partiellement, le doigt moulant le canal avant de retirer le secteur de couronne moulant la surface de roulement et la rainure 62.

La figure 11 représente une partie d'une autre bande de roulement 23 comportant une rainure 63 et un canal s'étendant d'un orifice 93 dans une face latérale de la bande de roulement 23 jusqu'à l'intérieur de la rainure 63. Contrairement aux exemples précédents, le canal traverse la rainure 63 : le mélange ayant rempli l'espace dû au jeu entre le doigt moulant le canal et la nervure moulant la rainure 63 forme un film 73 qui s'étend de la paroi latérale 35 à la paroi latérale opposée 53. Lors du démoulage de la nervure moulant la rainure 63, ce film 73 se déforme, puis se déchire. Si, pendant le moulage, le mélange n'a pas rempli tout l'espace dû au jeu entre le doigt moulant le canal et la nervure moulant la rainure 63, le démoulage de la nervure peut être possible sans déchirure du film 73. La trace du plan 103 qui est localement tangent à la partie 35, radialement extérieure au canal, divise le canal en deux parties 135 et 235.

Bien entendu le procédé selon l'invention permet d'obtenir, dans une même bande de roulement des canaux traversant certaines rainures et débouchant sur une seule paroi latérale d'autres rainures. Figure 12 représente schématiquement une bande de roulement 25 obtenue par le procédé selon l'invention. La bande de roulement 25 comporte trois rainures 65, 67 et 68 et un canal 155 s'étendant d'un orifice 95 dans une face latérale de la bande de roulement 25 jusqu'au milieu axial de la bande de roulement 25. Le canal 155 traverse la rainure 65 et se termine à l'intérieur de la rainure 67. Le film 75 entourant le canal 155 à l'intérieur de la rainure 65 se déforme, puis se déchire lors du démoulage de la nervure moulant la rainure 65. Lors de la deuxième étape du procédé selon l'invention, on procède à l'ablation des films 75 et 77 de mélange formé à l'intérieur des rainures 65 et 67.

Comme cela est montré dans la figure 13, le procédé selon l'invention permet également d'obtenir une bande de roulement 26 comportant des canaux 165 débouchant sur les deux faces latérales 46 de la bande de roulement et traversant toutes les rainures 66. Lors de la deuxième étape du procédé selon l'invention, on procède à l'ablation du film 76 de mélange formé à l'intérieur de chacune des rainures 66.

L'homme du métier comprend que le principe de l'invention s'applique indifféremment au cas où l'on désire mouler des canaux sur une face latérale 4 (figure 1) de la bande de roulement seulement ou sur les deux faces latérales. Les canaux sur des flancs opposés peuvent être arrangées de façon symétrique ou non. Les secteurs de couronne 30 peuvent couvrir toute la largeur de la bande de roulement ou seulement une partie de celle-ci.

Le nombre de canaux 5 et leur géométrie précise sont déterminés en fonction du résultat recherché sur la bande de roulement finie. Chaque secteur peut porter plusieurs doigts 70 ou au contraire, certains secteurs peuvent ne pas porter de doigt 70.

Il est également possible de faire porter les doigts 70 par des secteurs de couronne 30 à condition que les doigts 70 soient mobiles axialement par rapport aux secteurs de couronne 30.

Des canaux 5 peuvent être disposés axialement ou selon une direction oblique par rapport à l'axe du pneumatique. De même, la section, dans une coupe radiale, d'au moins un canal peut varier dans la direction de la plus grande dimension du canal.

Le procédé selon l'invention permet d'obtenir des bandes de roulement annulaires ou non, de longueur finie ou au contraire de longueur quasi infinie, en mode continu et à plat. On peut de cette manière mouler non seulement des bandes de roulement destinées à la production ou au rechapage de pneumatiques, mais également des chenilles en caoutchouc.

## Revendications

1. - Procédé pour obtenir une bande de roulement (2 ; 21 ; 22 ; 23 ; 25 ; 26) de pneumatique (1) en mélange de caoutchouc, cette bande (2 ; 21 ; 22 ; 23 ; 25 ; 26) comportant une surface de roulement (3) limitée axialement par des faces latérales (4 ; 46), au moins une rainure (6 ; 61 ; 62, 63 ; 65 ; 66 ; 67) limitée par deux parois latérales (15,51 ; 27,72 ; 35,53), et au moins un canal situé radialement sous la surface de roulement (3) et débouchant sur au moins une face latérale (4 ; 46) de la bande de roulement (2; 21 ; 22; 23 ; 25; 26) et sur au moins une paroi latérale (15,51 ; 27,72 ; 35,53) d'au moins une rainure (6 ; 61 ; 62, 63 ; 65 ; 66 ; 67), ce procédé comportant les étapes suivantes :
- moulage de la bande de roulement (2 ; 21 ; 22 ; 23 ; 25 ; 26) avec au moins une rainure (6 ; 61; 62, 63; 65; 66; 67) et au moins un canal (5; 155; 165) débouchant sur au moins une face latérale (4; 46) de la bande de roulement (2 ; 21; 22; 23 ; 25 ; 26), ce canal (5 ; 155; 165) étant prolongé, à l'intérieur de la rainure (6 ; 61 ; 62, 63 ; 65 ; 66 ; 67) de manière à ce qu'au moins un plan qui est localement tangent à la partie radialement extérieure au canal (5 ; 155; 165) d'au moins une paroi latérale (15,51 ; 27,72 ; 35, 53) sur laquelle débouche le canal (5; 155 ; 165) divise le canal (5; 155; 165) en deux parties (115,215 ; 125,225 ; 135,235) ;
- ablation, après vulcanisation, d'au moins une partie du mélange moulé autour du canal (5 ; 155 ; 165) à l'intérieur de la rainure (6 ; 61 ; 62, 63 ; 65 ; 66 ; 67).

2. - Procédé selon la revendication 1, dans lequel les géométries des éléments moulants sont choisies telles que le canal (5 ; 155) se prolonge à l'intérieur de la rainure (6; 61 ; 62, 67) par une protubérance (7).

3. - Procédé selon la revendication 2, dans lequel les géométries des éléments moulants sont choisies telles que la distance axiale (d) entre au moins un plan (101 ; 102 ; 103) qui est localement tangent à la partie radialement extérieure au canal (5 ; 155) de la paroi latérale (8 ; 15 ; 27) à laquelle la protubérance (7) forme saillie et le point de la surface intérieure du canal (5 ; 155) le plus proche de la paroi latérale (51 ; 72) de la rainure (6 ; 61 ; 62, 67) opposée à la paroi latérale sur laquelle la protubérance (7) forme saillie est supérieure à 20 % de la largeur moyenne (L) de la rainure (6 ; 61; 62,67).

4. - Procédé selon la revendication 1, dans lequel les géométries des éléments moulants sont choisies telles que le canal (155 ; 165) traverse ladite rainure (63 ; 65 ; 66) de manière à ce que une première partie (135) du canal (155 ; 165) débouche à la fois sur une face latérale de la bande de roulement et sur une paroi latérale (35) de la rainure (63 ; 65 ; 66), et qu'une autre partie (235) du canal (155 ; 165) débouche en regard de la première sur la paroi latérale (53) opposée de la rainure

5. - Procédé selon l'une des revendications 1 à 4, dans lequel tout le mélange entourant le canal (5 ; 155 ; 165) à l'intérieur de ladite rainure (6 ; 61 ; 62, 63 ; 65 ; 66 ; 67) à l'issu de l'étape de moulage est enlevé lors de l'ablation.

6. - Procédé selon l'une des revendications 1 à 5, dans lequel l'ablation est effectuée sur le pneumatique (1) mis en rotation, par découpe, à l'aide d'un couteau qui est introduit dans la rainure (6 ; 61; 62, 63 ; 65 ; 66 ; 67), en suivant le profil de la rainure (6 ; 61 ; 62, 63 ; 65; 66 ; 67).

7. - Procédé selon l'une des revendications 1 à 5, dans lequel l'ablation est effectuée sur le pneumatique (1) mis en rotation, par une meule (80) qui est introduite dans la rainure (6 ; 61 ; 62, 63 ; 65 ; 66 ; 67), en suivant le profil de la rainure (6 ; 61; 62, 63 ; 65 ; 66 ; 67).

8. - Procédé selon l'une des revendications 1 à 5, dans lequel l'ablation est effectuée sur le pneumatique (1) mis en rotation, par un faisceau laser, en suivant le profil de la rainure (6 ; 61 ; 62, 63; 65; 66 ; 67).

## Claims

1. Method of obtaining a tread (2; 21; 22; 23; 25; 26) for a tyre (1) made of a rubber compound, this tread (2; 21; 22; 23; 25; 26) comprising a rolling surface (3) bounded axially by lateral faces (4; 46), at least one groove (6; 61; 62, 63; 65; 66; 67) bounded by two lateral walls (15, 51; 27, 72; 35, 53) and at least one channel located radially below the rolling surface (3) and emerging in at least one lateral face (4; 46) of the tread (2; 21; 22; 23; 25; 26) and in at least one sidewall (15, 51; 27, 72; 35, 53) of at least one groove (6; 61; 62, 63; 65; 66; 67), this method comprising the following steps:
- moulding of the tread (2; 21; 22; 23; 25; 26) with at least one groove (6; 61; 62, 63; 65; 66; 67) and at least one channel (5; 155; 165) emerging in at least one lateral face (4; 46) of the tread (2; 21; 22; 23; 25; 26), this channel (5; 155; 165) being extended, inside the groove (6; 61; 62; 63; 65; 66; 67) so that at least one plane which is locally tangential to that part, radially external to the channel (5; 155; 165), of at least one sidewall (15, 51; 27, 72; 35, 53) in which the channel (5; 155; 165) emerges divides the channel (5; 155; 165) in two parts (115, 215; 125, 225; 135, 235); and
- ablation, after vulcanization, of at least one part of the compound moulded around the channel (5; 155; 165) inside the groove (6; 61; 62, 63; 65; 66; 67).

2. Method according to Claim 1, in which the geometries of the moulding elements are chosen in such a way that the channel (5; 155) is extended inside the groove (6; 61; 62, 67) by a protuberance (7).

3. Method according to Claim 2, in which the geometries of the moulding elements are chosen in such a way that the axial distance (d) between at least one plane (101; 102; 103) which is locally tangential to that part, radially external to the channel (5; 155), of the sidewall (8; 15; 27) on which the protuberance (7) projects and that point on the inner surface of the channel (5; 155) closest to the sidewall (51; 72) of the groove (6; 61; 62, 67) opposite the sidewall from which the protuberance (7) projects is greater than 20% of the average width (L) of the groove (6; 61; 62, 67).

4. Method according to Claim 1, in which the geometries of the moulding elements are chosen in such a way that the channel (155; 165) passes through said groove (63; 65; 66) so that a first part (135) of the channel (155; 165) emerges both in a lateral face of the tread and in a sidewall (35) of the groove (63; 65; 66) and so that another part (235) of the channel (155; 165) emerges facing the first part of the opposite sidewall (53) of the groove.

5. Method according to one of Claims 1 to 4, in which the entire compound surrounding the channel (5; 155; 165) inside said groove (6; 61; 62, 63; 65; 66; 67) resulting from the moulding step is removed during the ablation.

6. Method according to one of Claims 1 to 5, in which the ablation is carried out, on the tyre (1) set in rotation, by cutting using a knife that is inserted into the groove (6; 61; 62, 63; 65; 66; 67), following the profile of the groove (6; 61; 62, 63; 65; 66; 67).

7. Method according to one of Claims 1 to 5, in which the ablation is carried out, on the tyre (1) set in rotation, by a grinding wheel (80) which is inserted into the groove (6; 61; 62, 63; 65; 66; 67), following the profile of the groove (6; 61; 62, 63; 65; 66; 67).

8. Method according to one of Claims 1 to 5, in which the ablation is carried out, on the tyre (1) set in rotation, by a laser beam, following the profile of the groove (6; 61; 62, 63; 65; 66; 67).

## Patentansprüche

1. Verfahren, um eine Lauffläche (2; 21; 22; 23; 25; 26) eines Luftreifens (1) aus Gummimischung zu erhalten, wobei diese Fläche (2; 21; 22; 23; 25; 26) eine Abrollfläche (3), die axial von Seitenflächen (4; 46) begrenzt ist, mindestens eine von zwei Seitenwänden (15, 51; 27, 72; 35, 53) begrenzte Rille (6; 61; 62, 63; 65; 66; 67) und mindestens einen Kanal, der sich radial unter der Abrollfläche (3) befindet und in mindestens eine Seitenfläche (4; 46) der Lauffläche (2; 21; 21; 23; 25; 26) und in mindestens eine Seitenwand (15, 51; 27, 72; 35, 53) mindestens einer Rille (6; 61; 62, 63; 65; 66; 67) einmündet, aufweist, wobei dieses Verfahren folgende Schritte aufweist:
- Abformen der Lauffläche (2; 21; 22; 23; 25; 26) mit mindestens einer Rille (6; 61; 62, 63; 65; 66; 67) und mindestens einem Kanal (5; 155; 165), der in mindestens eine Seitenfläche (4; 46) der Lauffläche (2; 21; 22; 23; 25; 26) einmündet, wobei dieser Kanal (5; 155; 165) sich im Innern der Rille (6; 61; 62, 63; 65; 66; 67) fortsetzt, so dass mindestens eine Ebene, die lokal den radial außerhalb des Kanals (5; 155; 165) liegenden Teil mindestens einer Seitenwand (15, 51; 27,72; 35, 53), in die der Kanal (5; 155; 165) einmündet, tangiert, den Kanal (5; 155; 165) in zwei Teile (115, 215; 125, 225; 135, 235) teilt;
- Abtrennen nach dem Vulkanisieren mindestens eines Teils der um den Kanal (5; 155; 165) herum geformten Mischung im Innern der Rille (6; 61; 62, 63; 65; 66; 67).

2. Verfahren nach Anspruch 1, wobei die Geometrien der Formelemente derart gewählt werden, dass der Kanal (5; 155) sich im Innern der Rille (6; 61; 62; 67) in einer Ausstülpung (7) fortsetzt.

3. Verfahren nach Anspruch 2, wobei die Geometrien der Formelemente derart gewählt werden, dass der Axialabstand (d) zwischen mindestens einer Ebene (101; 102; 103), die stellenweise den radial außerhalb des Kanals (5; 155) liegenden Teil der Seitenwand (8; 15; 27), auf der die Ausstülpung (7) vorspringt, tangiert, und dem Punkt der Innenfläche des Kanals (5; 155), welcher der Seitenwand (51; 72) der Rille (6; 61; 62, 67) am nächsten ist, die der Seitenwand gegenüberliegt, auf der die Ausstülpung (7) vorspringt, größer ist als 20 % der durchschnittlichen Breite (L) der Rille (6; 61; 62, 67).

4. Verfahren nach Anspruch 1, wobei die Geometrien der Formelemente derart gewählt werden, dass der Kanal (155; 165) die Rille (63; 65; 66) durchquert, so dass ein erster Teil (135) des Kanals (155; 165) sowohl in eine Seitenfläche der Lauffläche als auch in eine Seitenwand (35) der Rille (63; 65; 66) einmündet, und dass ein anderer Teil (235) des Kanals (155; 165) gegenüber dem ersten Teil auf der Seitenwand (53), die der Rille gegenüberliegt, einmündet.

5. Verfahren nach einem der Ansprüche 1 bis 4, wobei die ganze Mischung, die den Kanal (5; 155; 165) umgibt, im Innern der Rille (6; 61; 62, 63; 65; 66; 67) nach dem Abformschritt beim Abtrennen entfernt wird.

6. Verfahren nach einem der Ansprüche 1 bis 5, wobei das Abtrennen auf dem in Drehung versetzten Luftreifen (1) durch Abschneiden anhand eines Messers erfolgt, das in die Rille (6; 61; 62, 63; 65; 66; 67) eingeführt wird, indem man dem Profil der Rille (6; 61; 62, 63; 65; 66; 67) nachgeht.

7. Verfahren nach einem der Ansprüche 1 bis 5, wobei das Abtrennen auf dem in Drehung versetzten Luftreifen (1) durch einen Schleifkörper (80) erfolgt, der in die Rille (6; 61; 62, 63; 65; 66; 67) eingeführt wird, indem man dem Profil der Rille (6; 61; 62, 63; 65; 66; 67) nachgeht.

8. Verfahren nach einem der Ansprüche 1 bis 5, wobei das Abtrennen auf dem in Drehung versetzten Luftreifen (1) durch einen Laserstrahl erfolgt, indem man dem Profil der Rille (6; 61; 62, 63; 65; 66; 67) nachgeht.
